# EUROPEAN PATENT SPECIFICATION

(11) **EP 1 146 796 B1**
(45) Date of publication and mention of the grant of the patent: **20.11.2002**
(21) Application number: 99964655.7
(22) Date of filing: 20.12.1999
(51) Int. Cl.: A23L 1/182, A23L 1/10

(54) **QUICK COOKING RICE AND PROCESS TO MAKE**
SCHNELLKOCHENDEN REIS UND VERFAHREN ZU DESSEN HERSTELLUNG
RIZ A CUISSON RAPIDE ET PROCEDE DE FABRICATION

(30) Priority: 26.01.1999 EP 99200213; 01.09.1999 EP 99202837
(43) Date of publication of application: 24.10.2001
(73) Proprietor: UNILEVER N.V., 3013 AL Rotterdam (NL); Unilever Plc, London, Greater London EC4P 4BQ (GB)
(72) Inventor: BLONK, Johannes C. G. Unilever Res. Vlaardingen, NL-3133 AT Vlaardingen (NL); GRAAF VAN DER, Leendert M. Unil. Res. Vlaardingen, NL-3133 AT Vlaardingen (NL); GROENEWEG, Fransiscus Unilever Res. Vlaardingen, NL-3133 AT Vlaardingen (NL); TEN HAVE, Sander Unilever Research Vlaardingen, NL-3133 AT Vlaardingen (NL); HEMELAAR, Maria J. A. Unilever Res. Vlaardingen, NL-3133 AT Vlaardingen (NL); SARWIN, Ridwan Unilever Research Vlaardingen, NL-3133 AT Vlaardingen (NL)
(74) Representative: Sikken, Antonius H. J. M.
(86) International application number: EP9910288
(87) International publication number: WO00044244

(56) References cited:
- EP-A- 0 059 565
- EP-A- 0 743 497
- US-A- 5 613 428
- DATABASE WPI Section PQ, Week 9745 Derwent Publications Ltd., London, GB; Class P28, AN 97-484223 XP002096510 & JP 09 224826 A (PALOMA KOGYO KK), 2 September 1997 (1997-09-02)

## Description

Rice is in many countries the main component of the daily meal. In general an untreated rice is used in these countries to prepare their rice based meals. Herefor the untreated rice is added to water or boiling water, the mixture is brought to boil and the rice is cooked. In general the cooked rice (after all water is absorbed by rice) is kept to stand for some time which is described as "standing time". This whole process takes about 15-40 min for white milled rice and results in a cooked rice with very good product characteristics such as cohesion, adhesion, springiness, even texture without grittiness/sandiness, white colour and taste.

The scores used to describe the attributes (i.e.: cohesion, adhesion, springiness, grittiness and even texture) of rice prepared under the optimum conditions are defined on a scale of 1 to 5, as evaluated sensorially by an expert panel (cf table 2).

Cohesion is described as the ability of the rice after cooking to hold together as a mass during mastication. Score 1 means separate kernels and no cohesion, while 5 means the formation of a clump in the mouth and much cohesion.

Adhesion is defined as the degree to which a sample of cooked rice holds together when first placed in the mouth and then separates into individual pieces when manipulated with the tongue. Score 1 is given for samples with an empty mouthfeel, giving a kind of "melting" behaviour when put into the mouth, while the score 5 is reserved for samples with a "full" mouthfeel and a clearly present mass in the mouth.

Springiness is defined as the degree to which a grain of cooked rice returns to its original shape after it has been compressed by the teeth, wherein score 1 means no return of the kernel and 5 an almost elastic behaviour of the kernel like eg. well prepared parboiled rice.

Grittiness is defined as the degree to which rice gives a perception of sandy or gritty particles in the mouth during chewing and after swallowing the largest part of the mass.

Firmness (or hardness) being defined as the force required to bite through a rice kernel after cooking.

Even texture of the cooked rice is defined by the presence of individual kernels which are noticeable during mastication as a mass of rice with an overall homogeneous structure, and by the absence of parts of the kernel being eg. harder, more elastic or gritty.

Other parameters that are used to describe the new rice are:
- the porosity of the uncooked rice kernels as measured by scanning electron microscopy. This porosity is measured on the cross-surface of a rice kernel, after cutting the kernel into two parts with e.g. a razor blade, and is expressed as the average percentage of the cross-surface that is taken in by pores with a pore size of 1-100 microns, preferably 1-50 microns, most preferably 1-5 microns.
- the colour of the rice grains as measured by a colorimeter according to the CIE (Commission Internationale de l'Eclairage), giving L, a, b values. The L-value indicates "lightness" of the sample, on a scale from black to white. a and b values are the chromaticity coordinates. +a is red direction, - a is green direction, +b is the yellow direction and -b the blue direction (cf table 1).

The time of 15-25 min for the preparation of a cooked rice is considered nowadays as unacceptably long. Therefore, attempts were made to find new processes resulting in new types of rice that would reduce the preparation times thereof. These attempts resulted in for example the finding of an instant rice made by a wet process (EP 17040) wherein the rice is soaked, cooked with excessive water, steamed and subsequently dried or by a gun puffing process (US 4520574) wherein the rice is conditioned up to about 20% moisture and expanded in a puffing gun at low pressure.

The instant rice so obtained could be prepared for eating by adding boiling water to the rice, stirring the mixture and standing for 5 min. However, the rice so obtained had a number of drawbacks such as the rice showed little adhesion and was soft, while the rice displayed hardly any springiness, which is required to achieve an acceptable eating performance and was watery and tasteless

In an alternative process a quick cooking rice was obtained by a wet processing wherein the rice is cooked up to 30-40% moisture, rolled, bumped to flatten and subsequently dried (EP 672353). This product could be cooked within 7-25 min which includes cooking and standing time, depending on the nature of the rice used. In general the preparation time consists of several types of treatments at fixed times, which thus it is not very convenient. Moreover, the products obtained displayed insufficient mouthfeel and taste, while the springiness and cohesion of the product was unacceptable.

According to a last alternative method a quick cooking rice was made by subjecting a rice to direct hot air at 400-600 °C in at least two cyclones for 10-15 sec (US 4478862). The rice so obtained could be cooked within 4-8 min, but the cooked rice displayed grittiness and showed during cooking an uneven appearance due to presence of chalky grains as well as transparent grains at the same time. Further had the rice an uneven structure, especially in rice varieties like Indonesian IR64, resulting in an uneven thickness of the outer, not sponge-like region of the kernel, in the presence of very large holes (> 1 mm), and cracks extending from the outer region deep into the sponge-like interior of the kernel, and resulting in undesired broken rice kernels during cooking.

Therefore, we studied whether we could find a new process that would produce a rice without the disadvantages set out above. This study resulted in the finding of such a new process and in the development of a new rice that combined, after cooking good cohesion properties with a very good bite and springiness, which was not gritty and did not display off-taste properties. Moreover, this rice displayed a very advantageous microporous structure under a microscope having a high percentage of pores with a pore size of most preferably 1-5 microns. Therefore the rice was very white to light yellow after cooking. It also was found that the above process, when applied to different types of rice (e.g. Indian, Indonesian, Thai, Vietnamese, Chinese, Korean, Japanese, Brasilian, Egyptian, Kenian etc), although all resulting in a rice with the desired eating and cooking properties, also resulted in quick cooking rices that fulfil different compound parameters. Therefore the quick cooking rice according to the invention can be described in alternative ways, however all being part of our novel invention.

Table 1 shows the results of a colour measurement of the untreated and treated rice of two types: Indonesian (IR64) and Thai (Jasmine) rice. Comparison in colour is given for untreated and treated rice products (which were treated according to the dry process mentioned above) and for rice made by the process of this invention.

**Table 1:**

| Colour measurement of cooked and uncooked IR64 and Jasmine rice | | | | | | | |
|---|---|---|---|---|---|---|---|
| | Rice type | uncooked | | | cooked rice | | |
| | | L | a | b | L | a | b |
| 1 | IR 64 untreated | 69.5 | -0.79 | 10.6 | 74.4 | -2.02 | 3.8 |
| 2 | IR 64 invention | 84.3 | -0.91 | 12.4 | 67.4 | -1.67 | 5.7 |
| 3 | IR 64 dry process | 75.9 | 0.22 | 16.7 | 67.1 | -1.13 | 9.9 |
| 4 | Jasmine untreated | 67.3 | -1.51 | 10.3 | 72 | -2.0 | 2.5 |
| 5 | Jasmine invention | 88 | -1.33 | 10.2 | 69.3 | -1.93 | 6.7 |
| 6 | Jasmine dry process | 86.5 | -1.06 | 11 | 69.9 | -1.58 | 7.9 |

As shown in Table 1 the new rice made by the process of this invention for both types of rice (IR64 and Jasmine) has lower +b values, i.e. less yellowness than the rice made by the dry process independently whether this new rice is cooked or uncooked. In addition this new rice has also the lower -a value than the rice made by the dry process. The overall result (with the exception of the L value) of this measurement shows that the new rice made by the process of this invention displayed the color appearance closer to the reference untreated rice than the rice made by the dry process did.

According to a first embodiment of our invention this new rice can de defined as formulated in claim 1. Ie our novel quick cooking rice has a preparation time for eating purposes of less than 10 min, preferably less than 8 min and displays after cooking good overall eating properties, and has the appearance of natural, untreated rice and includes one or more of the following properties:
(i) a springiness for the cooked quick cooking rice comparable with that of a cooked untreated rice
(ii) a pore distribution for the uncooked, quick cooking rice sothat more than 18% of the surface of a cross-section is taken in by pores with a size of 1-100 microns, preferably 1-50 microns, most preferably 1-5 microns
(iii) a white or light yellow colour after cooking
(iv) free of grittiness after cooking
(v) a firmness after cooking comparable with that of cooked untreated rice

According to a second embodiment of our invention alternative types of quick cooking rice can be described as quick cooking expanded rice kernels with a preparation time for eating purposes of less than 10 min and before cooking having:
- an outersurface with cracks predominantly in the longitudinal direction of the rice kernels
- an internal sponge like structure surrounded by a massive rim, which sponge like structure has a pore distribution such that the mass of the sponge like structure is free of transversal cracks and contains no or only a few holes with a size of more than 500 microns, while the rest of the sponge like structure consists of small pores
a bulk density that is more than 10 %, preferably more than 20 % and most preferably more than 25 % less than the bulk density of the natural rice it originates from.

The pore distribution is preferably such that 20-50%, more preferably 25-40% of the surface of the cross-section consists of pores with a size of 1-5 microns. This could be concluded from photos made from our novel rice, and comparison with photos of untreated rice. Rice kernels are observed using a scanning electron microscope. The outer surface is observed without any pretreatment of the kernel, the interior structure after breaking the kernel in longitudinal direction using a sharp razor blade. The rim is defined as the not sponge-like outer part of the kernel.

Our novel quick cooking rice according to our second embodiment displayed cracks mainly in the longitudinal direction of the rice kernels. These cracks, present in the dense outer layer or rim of the kernel only, have a width of 5 to 300 microns, in particular of 15 to 200 microns and have a depth of 100 to 250 microns, in particular of 130 to 200 microns. The number of these cracks per rice kernel varies between 0 and 10 but in general this number is between 2 and 7.

The novel rice kernels according to this embodiment of the invention have as a characteristic that they have a massive rim around a sponge like structure. This massive rim has a thickness of 10 to 250 microns, preferably of 50 to 200 microns, more preferably of 100 to 150 microns.

The sponge like structure contains per kernel less than 5, preferably less than 3 holes with a size of more than 500 microns. The presence of these holes seems disadvantageous for the strength of the rice kernels as comes out in the amount of damaged rice kernels in particular as obtained after cooking of the rice. In this respect it is also important that the sponge like mass is substantially or even better completely free of transversal cracks, in particular free of cracks perpendicular to the long axis of the kernel. These transversal cracks are also contributing to the amount of broken rice kernels after cooking. Thus although cracks might be present in the rim of our novel rice kernels these cracks are substantially or completely absent in the sponge like mass. This sponge like mass substantially consists of small holes, in particular this mass consists of small holes from which more than 75 % have a diameter of 1 to 100 microns. The size of these holes is different for different varieties of rice kernels. E.g for jasmine rice these holes are smaller than for Indonesian rice. Other varities, such as e.g. Basmati have a more homogeneous distribution of pores. We believe that these small holes (or pores) have an important function in the water absorption capacity of the rice kernels and thus in the cooking time of the rice kernels.

The novel rice kernels according to this embodiment of the invention further display a bulk density (as measured by weighting one liter of the rice kernels) of 0.4 to 0.75 kg/l, in particular of 0.45 to 0.70 kg/l. This bulk density in fact illustrates the porosity of the rice kernels. (bulk density of a natural rice is about 0.84 kg/l).

The improved appearance of our novel rice kernels can be illustrated by the fact that our novel rice kernels have a considerable internal coherence, because after cooking for about 8 min at about 100 oC in water the amount of broken rice kernels has increased with less than 20 %, in particular with less than 15 % as a result of the cooking.

Our novel rice kernels can be obtained by a process, wherein milled or polished rice kernels are subjected to a heat treatment in a hot inert gas stream while being in an annular, fluidised bed with a limited height.

According to a preferred process the kernels of rice are treated in a hot gas stream, often hot air, which is passed through means which provide a high velocity swirling action to the gas and rice kernels in the gas stream in the lower part of a process chamber. The rice kernels to be processed are suspended in the gas stream in a well defined bed formation. The underside of the bed is exposed to a high velocity impact of the gas stream, leaving the means in an area where high turbulence exists. In this area the heat transfer rate in the process is increased. The means that provide the high velocity swirling action typically have an inclined blade structure like present in turbines (however they do not move).

The fact that provisions are taken to avoid that only the underside of the bed is to be exposed to the reaction conditions, prevents that the rice kernels are heated unevenly. The use of the means with the inclined blade structure causes the rice kernels to flow according to a toroidal movement. This ensures the even heating of the rice kernels.

Very useful conditions for this process are:
treatment times of 10-60 sec, preferably 15-50 sec most preferably 20-45 sec, treatment temperatures of 200-350 °C, preferably 240-310 °C which is dependent on the batch size. Moisture contents in the starting rice ranging from 5-40 wt%, preferably 10-20 %, whereas the products are cooled after the treatment within 2-30 min, preferably within 5-20 min to 25 °C.

The principles of the toroidal bed technology are disclosed in a number of patent applications. For reference the following patents are indicated: EP 68853; EP 288141; EP 382769; EP 293103; and EP 346004. All these patents disclose toroidal bed technology that can be applied in our processing. However, none of these patents discloses the use of this technology on the preparation of quick cooking rice products. A very beneficial process for the preparation of our novel rice products is disclosed in our co-pending European patent application 99202665.8. According to this processing the rice kernels have horizontal and vertical velocity components.

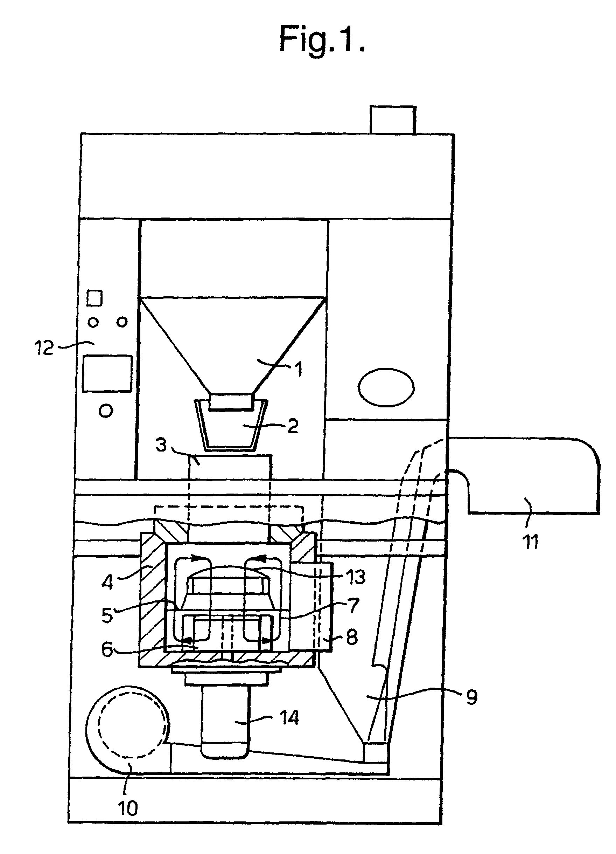

Our process e.g. can be performed in a process chamber as shown in the attached drawing. Herein the starting rice kernels are introduced by hopper (1) via feeder with weight unit (2) through feed door (3) into process chamber (4). Chamber (4) is provided with a plate of blade ring (5). The center of chamber (4) is provided with heating elements (7) above which a lid (13) with openings is present. Under the heating elements (7) process fan (6) is present which is driven by an impeller motor (14).

The wall of chamber (4) is provided with an outlet feed door (8), through which the final product is removed from the chamber (4) via cooling chamber (9) to outlet (11). The cooling chamber (9) is connected with cooling fan (10). The paramaters of the process condition are set and controlled with the control unit in the control cabinet (12).

During the process rice kernels are introduced via feed door (3) into chamber (4). Simultaneously a gas stream, preferably air is introduced below plate (5). The velocity of this gas stream is controlled by impeller (14) through which fresh gas is introduced via process fan (6). The temperature of the gas is measured and controlled by recirculating part of the process gas via the openings in the lid (13) whereupon the gas is reheated if necessary by heating elements (7). The heated gas is introduced in chamber (4) via the blades in plates (5). The rice kernels that are introduced via feed door (3) are heated while they are subjected to a toroidal movement in the lower parts of chamber (4) and form a toroidal, fluidised bed. The major part of the gas however is circulated via the openings in lid (13) and is reheated by elements (7). In particular the gas is recirculated in the process during and after separation of the rice kernel particles. After the time required to perform the process the process is stopped and the product is removed via outlet feed door (8) and cooled in the cooling chamber (9).

The gas usually is applied with a velocity of less than 50m/sec, preferably less than 25 m/sec, most preferably 10 to 25 m/sec.
The gas circulation can be performed by using an air impeller with a rotation speed of 60 Herz or less, in particular 50 Herz or less.

Evaluation of the cooked rice obtained by this process demonstrated that the products after cooking have good cohesion properties, display a good bite and mouthfeel, hardly grittiness, and no off taste. The springiness of the products is also very good. In addition the processed rice shows before cooking a very advantageous pore distribution and during cooking even appearance. The starch of the processed rice is partially gelatinized.

Part of the invention is also a rice containing meal, wherein the rice in the meal is a cooked rice, that is obtained after a quick cooking of the rice or the rice kernels according to the invention.

Table 2 summarizes the comparison of the product properties after cooking with those of a number of known products:

**Table 2:**

| Comparison of the product properties of different rice products evaluated by the sensoric panel | | | | | |
|---|---|---|---|---|---|
| product parameter | for invention | untreated rice | instant rice | wet process rice | dry process rice |
| cohesion/adhesion | 4 | 5 | 3 | 1 | 4 |
| firmness | 4 | 5 | 1 | 2 | 4 |
| springiness | 4 | 5 | 1 | 2 | 3 |
| grittiness | 4 | 5 | 5 | 5 | 1 |
| appearance | 4 | 5 | 1 | 3 | 2 |
| taste | 4 | 5 | 1 | 3 | 3 |

### NB:

Untreated rice referred as "reference" is scored on 5 as the maximum scale for each attribute. The lowest score of 1 is defined as the biggest difference from the reference.

### EXAMPLES

1. Batches of 250 g. of Indonesian rice were treated according to described processing method given the following processing conditions: temperature of 280 °C in processing chamber, processing time of 25 sec., cooling time of 10 min of which 20 sec in forced air circulation. The treated rice was stored in closed bags until use.
   This rice was put in a pan with 4 to 5 times its own weight of cold water, the mixture was stirred and brought to boil.
   The rice was cooked, without a lid for 7.5 minutes, depending on intensity of heat and size of pan.
   The mixture was occasionally stirred, especially when the water was taken up by the rice and evaporated. The rice could be eaten immediately (ie after about 2 min standing time) after cooking, when cooled down to temperatures at which rice is normally eaten.
2. Batches of 250 g. of Thai rice were treated according to described processing method given the following processing conditions: temperature of 300 °C in processing chamber, processing time of 25 sec., cooling time of 10 min of which 20 sec in forced air circulation.
   The treated rice was stored in closed bags until use.
   This rice was put in a pan with 4 to 5 times its own weight of cold water, the mixture was stirred and brought to boil. The rice was cooked without a lid for 6.5 to 7.5 minutes, depending on intensity of heat and size of pan.
   The mixture was occasionally stirred, especially when the water is taken up by the rice and evaporated. The rice could be eaten immediately after cooking, when cooled down to temperatures at which rice is normally eaten.
3. Pandan rice was treated at 280 °C during 18 sec. according to mehod of Example 1.

Rice kernels were observed in the Scanning Electron Microscope (SEM) after proper coating with a thin metal layer (typically a few nm Pd/Pt) to prevent charging in the SEM.
The internal structure of the kernels was observed by preparing a fracture, using a sharp razor blade, in the longitudinal direction of the kernel.

### Description of the structure

### External.

5 till 10 (mean 7) longitudinal cracks are present in the surface of the kernels.
The length of these cracks is between 0.5 and 5 mm (mean 2 mm).
The width of these cracks ranges from < 10 till 100 µm (mean value 50 µm).
The depth of the cracks between a few µm till 100 µm. Transversal cracks originate from deviating longitudinal cracks have similar dimensions, but in most cases these cracks converge rapidly, within a few tenths of a mm, to a width less than 10 µm. The number of these transversal cracks is between 10 and 30.

### Internal

Sponge-like structure surrounded by a non-porous rim. Thickness of the rim varies between 50 and 100 µm. In the rim the cracks are visible which have been mentioned in the description of the external surface. The cracks never continues into the sponge structure.
Holes in the sponge structure are absent or only 1 or 2 are present (mean 1).
The distribution of size of the holes ranges from 1 till 100 µm.
75% of the fracture surface (excluding the rim-region) contains holes smaller than 50 µm but larger than 5 µm. 25% of the fracture surface (excluding the rim region) contains holes smaller than 5 µm.
4. IR64 was treated at 280 °C during 30 sec. according to method of Example 1.

Rice kernels were observed in the Scanning Electron Microscope (SEM) after proper coating with a thin metal layer (typically a few nm Pd/Pt) to prevent charging in the SEM.
The internal structure of the kernels was observed by preparing a fracture, using a sharp razor blade, in the longitudinal direction of the kernel.

### Description of the structure

### External.

1 till 3 (mean 2) longitudinal cracks are present in the surface of the kernels.
The length of these cracks is between 4 and 6 mm (mean 5 mm)
The width of these cracks ranges from < 10 till 50 µm (mean value 30 µm).
The depth of the cracks between a few µm till 200 µm. Transversal cracks are running perpendicular to the transversal ones and have similar depth dimensions, they are much shorter in length and in most cases these cracks converge rapidly, within a few tenths of a mm, to a width less than 10 µm. The number of these transversal cracks is between 5 and 15.

### Internal

Sponge-like structure surrounded by a non-porous rim. Thickness of the rim varies between 100 and 200 µm. In the rim the cracks are visible which have been mentioned in the description of the external surface. The cracks never continues into the sponge structure.

Holes in the sponge structure are absent or only 1 or 2 are present (mean 1).
The distribution of holes ranges from 5 till 100 µm.
85% of the fracture surface (excluding the rim-region) contains holes smaller than 100 µm but larger than 10 µm. 15% of the fracture surface (excluding the rim region) contains holes smaller than 10 µm.
5. Basmati rice was treated at 280 °C during 18 sec. according to method of Example 1.

Rice kernels were observed in the Scanning Electron Microscope (SEM) after proper coating with a thin metal layer (typically a few nm Pd/Pt) to prevent charging in the SEM.
The internal structure of the kernels was observed by preparing a fracture, using a sharp razor blade, in the longitudinal direction of the kernel.

### Description of the structure

### External.

3 till 10 (mean 5) longitudinal cracks are present in the surface of the kernels.
The length of these cracks is between 0.5 and 5 mm (mean 2 mm).
The width of these cracks ranges from < 10 till 100 µm (mean value 50 µm).
The depth of the cracks between a few µm till 100 µm.
A few tens longitudinal cracks are present having a width less than 10 µm.
Transversal cracks originate from deviating small longitudinal cracks have similar dimensions, but in most cases these cracks converge rapidly, within a few hundreds micrometers to a width less than 2 µm. The number of these transversal cracks is between 50 and 100.

### Internal

Sponge-like structure surrounded by a non-porous rim. Thickness of the rim varies between 200 and 300 µm. In the rim the cracks are visible which have been mentioned in the description of the external surface. The cracks never continues into the sponge structure.
In less than 10% of the rice kernels a transversal crack is observed inside the sponge structure.
In the sponge structure 1 till 4 (mean 2) holes are present having a diameter along the log axis of more than 500 µm. The distribution of size of the holes in the sponge structure ranges from 5 till 150 µm.
85% of the fracture surface (excluding the rim-region) contains holes smaller than 150 µm but larger than 20 µm. 15% of the fracture surface (excluding the rim region) contains holes smaller than 20 µm.

## Claims

1. Quick cooking rice with a preparation time for eating purposes of less than 10 min and displaying after cooking good overall eating properties, and having the appearance of natural, untreated rice and including one or more of the following properties:
(i) a springiness for the cooked quick cooking rice comparable with that of cooked untreated rice
(ii) a pore distribution for the uncooked quick cooking rice sothat more than 18% of the surface of a cross-section is taken in by pores with a size of 1-100 microns, preferably 1-50 microns, most preferably 1-5 microns
(iii)a white to light yellow colour after cooking
(vi) being free of grittiness after cooking
(v) a firmness after cooking comparable with that of cooked untreated rice

2. Quick cooking rice according to claim 1 having a preparation time of less than 8 min.

3. Quick cooking rice according to claims 1-2 having a porosity sothat 20-50%, preferably 25-40% of the surface of the cross-section consists of pores of 1-5 microns.

4. Quick cooking rice as obtainable by performing the process according to one or more of the process claims 13-21

5. Quick cooking expanded rice kernels with a preparation time for eating purposes of less than 10 min and before cooking having:
- an outersurface with cracks predominantly in the longitudinal direction of the rice kernels
- an internal sponge like structure surrounded by a massive rim, which sponge like structure has a pore distribution such that the mass of the sponge like structure is free of transversal cracks and contains no or only a few holes with a size of more than 500 microns, while the rest of the sponge like structure consists of small pores
- a bulk density that is more than 10 %, preferably more than 20 % and most preferably more than 25 % less than the bulk density of the natural rice it originates from.

6. Quick cooking rice kernels according to claim 5, wherein the cracks in the longitudinal direction of the rice kernels have a width of 5 to 300 microns and a depth of 100 to 250 microns.

7. Quick cooking rice kernels according to claims 5-6, wherein the number of longitudinal cracks per rice kernel is less than 10, preferably 2 to 7.

8. Quick cooking rice kernels according to claims 5 to 7, wherein the rim has a thickness of 10 to 250 microns, preferably 100 to 150 microns.

9. Quick cooking rice kernels according to claims 5 to 8 wherein the sponge like structure contains per kernel less than 5, preferably less than 3 holes with a size of more than 500 microns.

10. Quick cooking rice kernels according to claims 5 to 9, wherein the sponge like mass consists of small holes from which more than 75 % have a diameter of 1 to 100 microns.

11. Quick cooking rice kernels according to claims 5 to 10 wherein the kernels have a bulk density of 0.4 to 0.75 kg/l preferably 0.45 to 0.70 kg/l.

12. Quick cooking rice kernels according to claims 5 to 11, wherein the kernels have a considerable internal coherence so that after cooking for 8 min at about 100 oC less than 20 % of the rice kernels, preferably less than 15 % are broken as a result of the cooking.

13. Process for making quick cooking rice or quick cooking rice kernels with the properties of the rice or the rice kernels from respectively claims 1 to 4 and claims 5-12, wherein milled or polished rice kernels are subjected to a heat treatment in a hot inert gas stream while being in an annular, fluidised bed with a limited height.

14. Process according to claim 13 for the preparation of a quick cooking rice or quick cooking rice kernels with the properties as defined in respectively claims 1-4 and 5-12, wherein rice kernels are subjected to a heat treatment in a hot gas stream in a treatment chamber and wherein the rice kernels are subjected to the heat treatment while being in an annular, fluidised, swirling, toroidal bed with a limited height and wherein the rice kernels have horizontal and vertical velocity components.

15. Process according to claims 13-14, wherein the rice kernels are heated to 200 - 350°C, preferably 240 - 310 °C.

16. Process according to claims 13-14, wherein the rice kernels are treated for 10-60 sec, preferably 15-50 sec, most preferably 20-45 sec in the treatment chamber.

17. Process according to claims 13-16, wherein air is applied as gas.

18. Process according to claims 13-17 wherein the gas is used with a velocity of less than 50 m/sec, preferably less than 25 m/sec

19. Process according to claims 13-18, wherein the gas is recirculated in the process during and after separation of the rice kernel particles.

20. Process according to claims 13-19, wherein the gas is recirculated using an air impeller with a rotation speed of 60 Herz or less, preferably 50 Herz or less.

21. Process according to claims 13-20, wherein the water content of the starting rice kernels is 5-40 wt%, preferably 10-20 wt%.

22. Rice containing meals, wherein the rice in the meals is a cooked rice obtained after quick cooking of the rice or the rice kernels according to respectively claims 1-4 and 5-12.

## Patentansprüche

1. Schnellkochender Reis mit einer Zubereitungszeit zum Essen von weniger als 10 Minuten, der nach dem Kochen insgesamt gute Esseigenschaften zeigt und mit dem Erscheinungsbild von natürlichem unbehandeltem Reis und einschließlich einem oder mehreren der nachfolgenden Eigenschaften:
(i) eine Federelastizität für den schnellkochenden Reis, vergleichbar mit der von gekochtem unbehandeltem Reis;
(ii) eine Porenverteilung für den ungekochten schnellkochenden Reis, so dass mehr als 18% der Oberfläche eines Querschnitts von Poren mit einer Größe von 1 bis 100 µm, vorzugsweise 1 bis 50 µm, insbesondere bevorzugt 1 bis 5 µm, eingenommen werden;
(iii) eine weiße bis leicht gelbe Farbe nach dem Kochen;
(iv) keine Grießigkeit nach dem Kochen und
(v) eine Festigkeit nach dem Kochen, vergleichbar mit der von gekochtem unbehandeltem Reis.

2. Schnellkochender Reis nach Anspruch 1 mit einer Zubereitungszeit von weniger als 8 Minuten.

3. Schnellkochender Reis nach den Ansprüchen 1 oder 2 mit einer Porosität, so dass 20 bis 50%, bevorzugt 25 bis 40%, der Oberfläche des Querschnitts aus Poren von 1 bis 5 µm bestehen.

4. Schnellkochender Reis, erhältlich durch Durchführen des Verfahrens nach einem oder mehreren der Verfahrensansprüche 13 bis 21.

5. Schnellkochende expandierte Reiskörner mit einer Zubereitungszeit zum Essen von weniger als 10 Minuten, die vor dem Kochen aufweisen:
- eine äußere Oberfläche mit Rissen, vorherrschend in der Längsrichtung der Reiskörner;
- eine innere schwammähnliche Struktur, umgeben von einem massiven Rand, wobei die schwammähnliche Struktur eine Porenverteilung aufweist, so dass die Masse der schwammähnlichen Struktur ohne transversale Risse vorliegt und keine oder nur wenige Löcher mit einer Größe von mehr als 500 µm enthält, während der Rest der schwammähnlichen Struktur aus kleinen Poren besteht;
- eine Schüttdichte, die mehr als 10%, vorzugsweise mehr als 20% und insbesondere bevorzugt mehr als 25% weniger als die Schüttdichte von natürlichem Reis, wovon diese abgeleitet ist, beträgt.

6. Schnellkochende Reiskörner nach Anspruch 5, worin die Risse in der longitudinalen Richtung der Reiskörner eine Breite von 5 bis 300 µm und eine Tiefe von 100 bis 250 µm aufweisen.

7. Schnellkochende Reiskörner nach Anspruch 5 oder 6, worin die Anzahl der longitudinalen Risse pro Reiskorn weniger als 10, vorzugsweise 2 bis 7, beträgt.

8. Schnellkochende Reiskörner nach den Ansprüchen 5 bis 7, worin der Rand eine Dicke von 10 bis 250 µm, vorzugsweise 100 bis 150 µm, aufweist.

9. Schnellkochende Reiskörner nach den Ansprüchen 5 bis 8, worin die schwammähnliche Struktur pro Korn weniger als 5, bevorzugt weniger als 3, Löcher mit einer Größe von mehr als 500 µm enthält.

10. Schnellkochende Reiskörner nach den Ansprüchen 5 bis 9, worin die schwammähnliche Masse aus kleinen Löchern besteht, von denen mehr als 75% einen Durchmesser von 1 bis 100 µm aufweisen.

11. Schnellkochende Reiskörner nach den Ansprüchen 5 bis 10, worin die Körner eine Schüttdichte von 0,4 bis 0,75 kg/l, vorzugsweise 0,45 bis 0,70 kg/l, aufweisen.

12. Schnellkochende Reiskörner nach den Ansprüchen 5 bis 11, worin die Körner eine beträchtliche innere Kohärenz aufweisen, so dass nach dem Kochen für 8 Minuten bei etwa 100°C weniger als 20% der Reiskörner, bevorzugt weniger als 15%, als Ergebnis des Kochens zerbrochen sind.

13. Verfahren zur Herstellung von schnellkochendem Reis oder schnellkochender Reiskörner mit den Eigenschaften von Reis oder der Reiskörner von jeweils den Ansprüchen 1 bis 4 und den Ansprüchen 5 bis 12, worin die geschälten oder geglätteten Reiskörner einer Wärmebehandlung in einem heißen inerten Gasstrom unterzogen werden, während sie sich in einem ringförmigen Fließbett mit einer begrenzten Höhe befinden.

14. Verfahren nach Anspruch 13 für die Herstellung von schnellkochendem Reis oder schnellkochender Reiskörner mit den Eigenschaften wie jeweils definiert in den Ansprüchen 1 bis 4 und 5 bis 12, worin die Reiskörner einer Wärmebehandlung in einem heißen Gasstrom in einer Wärmekammer unterzogen werden und worin die Reiskörner einer Wärmebehandlung unterzogen werden, während sie sich in einem ringförmigen wirbelnden, toroidalen Fließbett mit einer begrenzten Höhe befinden, und worin die Reiskörner horizontale und vertikale Geschwindigkeitskomponenten aufweisen.

15. Verfahren nach den Ansprüchen 13 oder 14, worin die Reiskörner auf 200 bis 350°C, bevorzugt 240 bis 310°C, erhitzt werden.

16. Verfahren nach den Ansprüchen 13 oder 14, worin die Reiskörner für 10 bis 60 Sekunden, bevorzugt 15 bis 50 Sekunden, insbesondere bevorzugt 20 bis 45 Sekunden, in der Behandlungskammer behandelt werden.

17. Verfahren nach den Ansprüchen 13 bis 16, worin die Luft als Gas eingesetzt wird.

18. Verfahren nach den Ansprüchen 13 bis 17, worin das Gas mit einer Geschwindigkeit von weniger als 50 m/s, bevorzugt weniger als 25 m/s, eingesetzt wird.

19. Verfahren nach den Ansprüchen 13 bis 18, worin das Gas in dem Verfahren während und nach der Abtrennung der Reiskornteilchen rezirkuliert wird.

20. Verfahren nach den Ansprüchen 13 bis 19, worin das Gas unter Verwendung eines Luftpropellers mit einer Rotationsgeschwindigkeit von 60 Hz oder weniger, bevorzugt 50 Hz oder weniger, rezirkuliert wird.

21. Verfahren nach den Ansprüchen 13 bis 20, worin der Wassergehalt der Ausgangsreiskörner 5 bis 40 Gew.-%, bevorzugt 10 bis 20 Gew.-%, beträgt.

22. Reis enthaltende Mahlzeiten, worin der Reis in den Mahlzeiten gekochten Reis darstellt, erhalten nach dem Schnellkochen von Reis oder der Reiskörner, nach jeweils den Ansprüchen 1 bis 4 und 5 bis 12.

## Revendications

1. Riz à cuisson rapide avec un temps de préparation à des fins de consommation de moins de 10 minutes et présentant de bonnes propriétés de consommation globale après cuisson, et ayant l'apparence du riz naturel, non traité et comprenant une ou plusieurs des propriétés suivantes :
(i) un moelleux pour le riz à cuisson rapide cuit comparable à celle d'un riz non traité cuit
(ii) une répartition des pores pour le riz à cuisson rapide cru de manière à ce que plus de 18% de la surface d'une section transversale soit occupée par des pores ayant une taille de 1 à 100 microns, de préférence de 1 à 50 microns, de manière préférée entre toutes de 1 à 5 microns,
(iii) une couleur blanche ou jaune clair après la cuisson,
(iv) l'absence de granulosité après la cuisson,
(v) une fermeté après la cuisson comparable à celle du riz non traité cuit.

2. Riz à cuisson rapide selon la revendication 1 ayant un temps de préparation de moins de 8 minutes.

3. Riz à cuisson rapide selon les revendications 1 et 2 ayant une porosité telle que 20 à 50%, de préférence 25 à 40% de la surface de la section transversale consiste en des pores de 1 à 5 microns.

4. Riz à cuisson rapide tel que pouvant être obtenu en effectuant le procédé selon l'une ou plusieurs des revendications de procédé 13 à 21.

5. Grains de riz gonflés à cuisson rapide avec un temps de préparation à des fins de consommation de moins de 10 minutes et ayant, avant la cuisson :
- une surface extérieure avec des fissures principalement dans le sens longitudinal des grains de riz
- une structure interne semblable à une éponge 5 entourée par un bord massif, ladite structure semblable à une éponge a une répartition des pores telle que la masse de la structure semblable à une éponge est exempte de fissures transversales et contient aucun ou quelques trous d'une taille supérieure à 500 microns, alors que le reste de la structure semblable à une éponge consiste en de petits pores
- une densité apparente de plus de 10%, de préférence de plus de 20% et de manière préférée entre toutes de plus de 25% inférieure à la densité apparente 5 du riz naturel dont il provient.

6. Grains de riz à cuisson rapide selon la revendication 5, dans lesquels les fissures dans le sens longitudinal des grains de riz ont une largeur de 5 à 300 microns et ont une profondeur de 100 à 250 microns.

7. Grains de riz à cuisson rapide selon les revendications 5 et 6, dans lesquels le nombre de fissures longitudinales par grain de riz est inférieur à 10, de préférence de 2 à 7.

8. Grains de riz à cuisson rapide selon les revendications 5 à 7, dans lesquels le bord a une épaisseur de 10 à 250 microns, de préférence de 100 à 150 microns.

9. Grains de riz à cuisson rapide selon les revendications 5 à 8, dans lesquels la structure semblable à une éponge contient par grain moins de 5, de préférence moins de 3 trous avec une taille de plus de 500 microns.

10. Grains de riz à cuisson rapide selon les revendications 5 à 9, dans lesquels la masse semblable à une éponge consiste en de petits trous dont plus de 75% ont un diamètre de 1 à 100 microns.

11. Grains de riz à cuisson rapide selon les revendications 5 à 10, dans lesquels les grains ont une densité apparente de 0,4 à 0,75 kg/l, de préférence de 0,45 à 0,70 kg/1.

12. Grains de riz à cuisson rapide selon les revendications 5 à 11, dans lesquels les grains ont une cohérence interne considérable de manière à ce qu'après une cuisson pendant environ 8 minutes à environ 100°C, moins de 20% des grains de riz, de préférence moins de 15% soient brisés en conséquence de la cuisson.

13. Procédé pour faire du riz à cuisson rapide ou des grains de riz à cuisson rapide avec les propriétés du riz ou des grains de riz indiquées respectivement dans les revendications 1 à 4 et les revendications 5 à 12, dans lequel des grains de riz usinés ou polis sont soumis à un traitement thermique dans un flux de gaz inerte chaud tout en étant dans un lit fluidisé annulaire avec une hauteur limitée.

14. Procédé selon la revendication 13 pour la préparation d'un riz à cuisson rapide ou de grains de riz à cuisson rapide avec les propriétés du riz ou des grains de riz indiquées respectivement dans les revendications 1 à 4 et les revendications 5 à 12, dans lequel les grains de riz sont soumis à un traitement thermique dans un flux de gaz chaud dans une chambre de traitement et dans lequel les grains de riz sont soumis au traitement thermique tout en étant dans un lit toroïdal, tourbillonnant, fluidisé, annulaire avec une hauteur limitée et dans lequel les grains de riz ont des composants de vitesse horizontale et verticale.

15. Procédé selon les revendications 13 et 14, dans lequel les grains de riz sont chauffés de 200 à 350°C, de préférence de 240 à 310°C.

16. Procédé selon les revendications 13 et 14, dans lequel les grains de riz sont traités pendant 10 à 60 secondes, de préférence de 15 à 50 secondes, de manière préférée entre toutes de 20 à 45 s dans la chambre de traitement.

17. Procédé selon les revendications 13 à 16, dans lequel de l'air est appliqué comme gaz.

18. Procédé selon les revendications 13 à 17, dans lequel le gaz est utilisé à une vitesse de moins de 50 m/s, de préférence de moins de 25 m/s.

19. Procédé selon les revendications 13 à 18, dans lequel le gaz est remis en circulation dans le procédé pendant et après la séparation des particules de grains de riz.

20. Procédé selon les revendications 13 à 19, dans lequel le gaz est remis en circulation en utilisant une hélice à air avec une vitesse de rotation de 60 Herz ou moins, en particulier 50 Herz ou moins.

21. Procédé selon les revendications 13 à 20, dans lequel la teneur en eau des grains de riz débutant est de 5 à 40% en poids, de préférence de 10 à 20% en poids.

22. Plats contenant du riz, dans lesquels le riz des plats est un riz cuit obtenu après une cuisson rapide du riz ou des grains de riz selon respectivement les revendications 1 à 4 et 5 à 12.
